# FASCICULE DE BREVET EUROPEEN

(11) **EP 0 612 563 B1**
(45) Date de publication et mention de la délivrance du brevet: **03.06.1998**
(21) Numéro de dépôt: 94400248.4
(22) Date de dépôt: 04.02.1994
(51) Int. Cl.: B01J 29/40, B01J 29/54, B01J 29/06

(54) **Catalyseur composite contenant un halogène, un metal noble et au moins un métal additionnel, et son utilisation en aromatisation d'hydrocarbures C2-C12**
Ein Halogen, Edelmetall und zusätzliches Metall enthaltender Komposit Katalysator, und seine Verwendung für die Aromatisierung von C2-C12 Kohlenwasserstoffen
Composite catalyst containing a halogen, a noble metal and at least one additional metal, and its use for the aromatisation of C2-C12 hydrocarbons

(30) Priorité: 24.02.1993 FR 9302203
(43) Date de publication de la demande: 31.08.1994
(73) Titulaire: INSTITUT FRANCAIS DU PETROLE, 92502 Rueil-Malmaison (FR)
(72) Inventeur: Alario, Fabio, F-92200 Neuilly sur Seine (FR); Benazzi, Eric, F-78360 Montesson (FR); Deves, Jean-Marie, F-78400 Chatou (FR)

(56) Documents cités:
- EP-A- 0 279 568
- EP-A- 0 350 367
- EP-A- 0 474 536
- EP-A- 0 507 656
- US-A- 5 080 878

## Description

La présente invention concerne :
**1/** un catalyseur, dit catalyseur composite, qui contient :
   - une zéolithe de structure MFI contenant dans sa charpente le silicium et au moins un élément choisi dans le groupe formé par l'aluminium et le gallium, et dont la surface externe de ses cristallites a été modifiée après sa synthèse, et dénommée ci-après "N/MFI",
   - une matrice,
   - au moins un métal noble de la famille du platine déposé dans la matrice et/ou la N/MFI (de préférence dans la matrice),
   - au moins un métal additionnel choisi dans le groupe constitué par l'étain, le germanium, l'indium, le plomb, le gallium et le thallium, les métaux du groupe Ib tels que le cuivre, l'or, l'argent, les métaux du groupe VIII tels que le nickel, le ruthénium, le fer et les métaux du groupe VI tels que le chrome, le molybdène, le tungstène, déposé dans la matrice et/ou la N/MFI (de préférence dans la matrice),
   - au moins un halogène choisi dans le groupe constitué par le fluor, le chlore, le brome et l'iode, de préférence le chlore, déposé dans la N/MFI et/ou la matrice (de préférence dans la matrice),
   - éventuellement au moins un élément dopeur choisi dans le groupe constitué par le gallium et le zinc, déposé dans la N/MFI et/ou la matrice (de préférence dans la N/MFI),
   - et éventuellement au moins un élément choisi dans le groupe constitué par les métaux alcalins et les alcalino-terreux, de préférence le lithium ou le potassium, et déposé dans la matrice et/ou la N/MFI.
**2/** sa préparation et l'utilisation dans les réactions d'aromatisation des hydrocarbures comportant de 2 à 12 atomes de carbone par molécule.

Les catalyseurs à base de zéolithes dopées au gallium ou au zinc ou au platine, sont connus pour être actifs et sélectifs en aromatisation du propane et du butane. Classiquement, les hydrocarbures à plus de 6 atomes de carbone par molécule sont transformés en aromatiques par reformage catalytique en utilisant des catalyseurs du type alumine acide contenant du platine, métal auquel on peut ajouter par exemple de l'étain ou du rhénium. Ces catalyseurs de reformage sont néanmoins très peu performants pour l'aromatisation des hydrocarbures contenant moins de 6 atomes de carbone par molécule. Il y a donc un grand intérêt pratique à trouver des catalyseurs performants pour l'aromatisation des hydrocarbures du type C2-C12, et plus particulièrement du type C3-C10.

La réaction d'aromatisation des hydrocarbures contenant moins de 9 atomes de carbone par molécule en présence de zéolithes a déjà fait l'objet de brevets et de publications. Les systèmes catalytiques à base de zéolithe MFI qui sont revendiqués, et qui sont dopés par exemple au gallium ou au zinc, souffrent tous d'un défaut important, à savoir une sélectivité élevée en méthane.

Récemment (demandes de brevets français 90/06015 et 91/10624 de la demanderesse), il a été découvert que l'utilisation de catalyseurs composites contenant une zéolithe MFI d'une part, et d'autre part un support ou une matrice généralement amorphe sur laquelle est déposé un métal noble de la famille du platine et au moins un métal additionnel comme l'étain, le plomb ou l'indium, conduit à des performances catalytiques, dans les réactions d'aromatisation des paraffines de 2 à 4 et de 5 à 9 atomes de carbone, nettement améliorées par rapport aux systèmes de l'art antérieur.

L'utilisation de tels catalyseurs permet en particulier de limiter les réactions qui conduisent à la formation de méthane, produit non désiré.

Plus récemment encore, il a été découvert par la demanderesse (demandes de brevets français 91/14205 et 91/14207) que l'utilisation d'un catalyseur composite contenant une zéolithe MFI éventuellement dopée par du gallium et/ou du zinc sous forme oxyde et une matrice sur laquelle est déposé au moins un métal noble de la famille du platine et au moins un métal additionnel des groupes I, III, IV, VI, VIII, ladite matrice contenant aussi au moins un halogène et éventuellement au moins un métal alcalin ou un alcalino-terreux, conduit à des performances catalytiques dans les réactions d'aromatisation des paraffines contenant de 2 à 4 et de 5 à 12 atomes de carbone par molécule nettement améliorées par rapport aux catalyseurs de l'art antérieur.

Les travaux de recherche effectués par la demanderesse l'ont conduite à découvrir que, de façon surprenante, l'utilisation d'un catalyseur composite contenant :
- une zéolithe MFI dont la surface externe de ses cristallites a été modifiée par au moins un traitement postérieur à sa synthèse, appelée ainsi "N/MFI", éventuellement dopée par du gallium et/ou du zinc sous forme oxyde et contenant éventuellement au moins un métal alcalin ou un alcalino-terreux,
   et
- une matrice sur laquelle est déposé au moins un métal noble de la famille du platine, tel que le palladium, le platine, le nickel, l'iridium ou le rhodium, au moins un métal additionnel choisi dans le groupe constitué par l'étain, le germanium, le plomb, l'indium, le plomb, le gallium et le thallium, les métaux du groupe Ib tels que le cuivre, l'or, l'argent, des métaux du groupe VIII tels que le nickel, le ruthénium, le fer et les métaux du groupe VI tels que le chrome, le molybdène, le tungstène, ladite matrice contenant aussi au moins un halogène (de préférence le chlore) et éventuellement au moins un métal alcalin ou un alcalino-terreux, de préférence le lithium ou le potassium,
   conduit à des performances catalytiques, dans les réactions d'aromatisation de charges hydrocarbonées comprenant des composés contenant de 2 à 12 atomes de carbone par molécule, améliorées par rapport aux catalyseurs de l'art antérieur.

La zéolithe MFI à partir de laquelle est obtenue la zéolithe N/MFI contenue dans le catalyseur de la présente invention peut être préparée par toutes les techniques décrites dans l'art antérieur. Ainsi la synthèse de ladite zéolithe peut être réalisée en milieu classique OH- en présence ou en absence d'agent organique et/ou d'alcool. Le document "Synthesis of high silica zeolites, P. Jacobs and J. Martens, Studies in Surface Science and Catalysis, Vol. 33, 1987" décrit la synthèse classique de la zéolithe MFI. La zéolithe MFI à partir de laquelle est obtenue la zéolithe N/MFI contenue dans le catalyseur de la présente invention peut également avoir été synthétisée dans des milieux moins classiques comme par exemple le milieu fluorure en présence (brevet EP-A-172068 et USP 5,085,763) ou en absence (demande de brevet français 90/16529) de composé organique. La zéolithe utilisée dans la présente invention contient, dans sa charpente cristallisée, du silicium et au moins un élément choisi dans le groupe formé par l'aluminium et le gallium.

Dans le cas où, dans la présente invention, la zéolithe MFI contient au moins un élément choisi parmi les métaux alcalins ou alcalino-terreux (ainsi notée A/MFI), son dépôt dans ladite zéolithe peut par exemple s'effectuer comme suit.

La zéolithe MFI est :
- soit transformée en une forme hydrogène, notée H-MFI, par élimination pratiquement totale des composés organiques et/ou des cations alcalins ou alcalino-terreux qu'elle contient éventuellement après synthèse. Toutes les techniques décrites dans l'art antérieur peuvent être utilisées pour le passage à la forme hydrogène, comme par exemple les échanges ioniques suivis ou non de calcination ou les traitements chimiques divers. Un ou plusieurs alcalin(s) ou alcalino-terreux additionnel(s) est (sont) ensuite introduit(s) par l'intermédiaire de sels en solutions aqueuses ou organiques par toutes les techniques connues de l'art antérieur, pour ensuite obtenir la A/MFI.
- soit directement transformée en une forme contenant un ou plusieurs alcalin(s) additionnel(s), par élimination totale éventuelle des composés organiques, ce ou ces alcalin(s) additionnel(s) étant alors apporté(s) par le milieu de synthèse de la zéolithe. La teneur en alcalin(s) ou alcalino-terreux additionnel(s) peut être alors éventuellement augmentée aisément à partir de sels de cet (ces) alcalin(s) ou alcalino-terreux en solutions aqueuses ou organiques par toutes les techniques connues de l'art antérieur, pour ensuite obtenir la A/MFI.

Ces méthodes ne limitent pas la portée de l'invention. L'introduction éventuelle d'au moins un métal alcalin ou alcalino-terreux peut aussi se faire à tout moment de la préparation du catalyseur selon la présente invention, notamment après la mise en forme.

La teneur en alcalin(s) ou alcalino-terreux additionnel(s) déposé(s) sur la zéolithe MFI est comprise entre 0,001 et 6 % en poids, de préférence entre 0,005 et 3 % en poids.

La zéolithe MFI, ou A/MFI dans le cas où elle contient au moins un élément choisi dans le groupe constitué par les alcalins ou alcalino-terreux, subit au moins un traitement tel que décrit ci-après, qui a pour but en particulier d'en modifier son acidité.

La zéolithe MFI, ou A/MFI, est soumise à au moins un traitement par au moins une solution diluée de fluorosilicate d'un cation, de préférence par au moins une solution diluée d'hexafluorosilicate d'ammoniun, qui comprend généralement entre 0.0006 moles et 0.006 moles pour 100g de zéolithe sèche et de préférence entre 0.002 et 0.006 moles. On obtient ainsi un taux de désalumination global inférieur à 5% atomique pour la zéolithe ainsi traitée, c'est-à-dire que le traitement enlève au plus 5% des atomes d'aluminium présents dans la charpente.

Le traitement par au moins une solution de fluorosilicate d'un cation est réalisé sur une zéolithe MFI dont le rapport atomique Si/Al global est généralement compris entre 5 et 1000 et de préférence entre 10 et 500. La zéolithe MFI est de préférence sous forme NH₄⁺ ou bien contient encore le structurant organique nécessaire à sa synthèse, elle peut aussi se trouver sous forme H⁺ ou Na⁺. La mise sous forme NH₄⁺ d'échantillon de zéolithe MFI s'effectue soit à partir de la forme sodique de la MFI synthétisée en milieu fluorure en l'absence de structurant organique, en réalisant plusieurs échanges ioniques par des solutions concentrées de nitrate d'ammonium (10N), soit à partir de la forme calcinée, sous air à 550°C, de la MFI contenant un structurant organique. La calcination étant ensuite suivie de plusieurs échanges ioniques par des solutions concentrées de nitrate d'ammonium (10N). La teneur pondérale en sodium, par rapport au poids de MFI sèche, est généralement inférieure à 2000 ppm, de préférence inférieure à 1000 ppm et, de manière encore plus préférée, inférieure à 200 ppm.

Le fluorosilicate utilisé en tant qu'agent de désalumination et de source de silicium, permettant la réinsertion d'atomes de silicium à la place des atomes d'aluminium extraits à la surface externe des cristallites de zéolithe, peut être l'un des sels possédant la formule suivante: M₂/xSiF₆, où M est un cation métallique ou non métallique possédant la valence x. Les cations M peuvent donc être NH₄⁺, des alkyls ammonium, K⁺, Na⁺, Li⁺, Ba²⁺, Mg²⁺, Cd²⁺, Cu⁺, Cu²⁺ Ca²⁺, Cs⁺, Fe²⁺, Co²⁺, Pb²⁺, Mn²⁺, Rb⁺, Ag⁺, Sr²⁺, Zn²⁺, Tl⁺ et H⁺. De préférence, l'hexafluorosilicate d'ammonium est utilisé, car il conduit à la formation de sel d'aluminium (NH4)₃AlF₆ soluble dans l'eau qui peut être aisément éliminé. En général, la température de traitement de la zéolithe par l'hexafluorosilicate d'ammonium est comprise entre 20 et 100°C, et de préférence entre 50 et 100 °C. Les quantités d'hexafluorosilicate d'ammonium employées, inférieures à 0.006 moles pour 100g de zéolithe sèche, sont calculées par rapport à une zéolithe séchée sous flux d'air sec, à 450° C, durant 4 heures. Le traitement de la zéolithe s'effectue en présence d'acétate d'ammonium qui permet de tamponner le pH du milieu réactionnel à des valeurs comprises entre 4 et 8, et de préférence entre 5,5 et 7 (valeurs de pH pour lesquelles la zéolithe ne subit pas de destruction de la charpente par attaque acide directe).

Après l'étape de mise en contact de la solution de fluorosilicate d'un cation, de préférence d'hexafluorosilicate d'ammonium, et de la suspension de zéolithe, par exemple dans une solution d'acétate d'ammonium, le mélange réactionnel est laissé, sous agitation vigoureuse, à la température désirée pendant une période généralement comprise entre 30 minutes et 48 heures, mais de préférence comprise entre 1 et 2 heures. Généralement, la zéolithe est ensuite filtrée à la température de la réaction et abondamment lavée à l'eau bouillante.

L'ensemble de traitements décrit ci-dessus, traitement de la zéolithe MFI par la solution de fluorosilicate d'un cation, de préférence d'hexafluorosilicate d'ammonium, suivi de la filtration et d'au moins un lavage abondant à l'eau bouillante, peut être recommencé autant de fois que cela est nécessaire pour conférer à la zéolithe le taux de désalumination de la surface externe des cristaux désiré, et conduisant à un catalyseur plus sélectif.

Après cet (ou ces) ensemble(s) de traitements, la zéolithe modifiée subit un traitement thermique destiné à décomposer les cations ammonium présents au sein du réseau et à obtenir ainsi principalement la forme acide (H+) de la zéolithe ainsi modifiée et désormais dénommée N/MFI.

Toutes les zéolithes de type MFI synthétisées dans l'un des systèmes suivants : Si-Al, Si-Al-Ga, Si-Ga, conviennent pour la présente invention. Cependant, leur rapport Si/T où T représente Al et/ou Ga, est généralement supérieur ou égal à 5, de préférence supérieur à 10 et de manière encore plus préférée compris entre 13 et 500.

La technique telle que décrite ci-dessus illustre la présente invention sans toutefois en limiter la portée.

La zéolithe N/MFI, dénomination générale désignant la zéolithe MFI utilisée dans la présente invention, et modifiée par la technique décrite précédemment, peut être soit éventuellement soumise telle quelle à un dépôt de gallium et/ou de zinc, de préférence de gallium, soit mélangée avec les autres constituants du catalyseur, le gallium et/ou le zinc, de préférence le gallium, pouvant alors éventuellement être introduits ultérieurement dans ledit mélange.

Le dépôt éventuel de gallium et/ou de zinc peut également intervenir préalablement à la modification de son acidité.

De nombreuses techniques de dépôt de gallium et/ou de zinc peuvent être utilisées dans la présente invention, parmi lesquelles on peut citer les échanges ioniques grâce à l'utilisation de sels en solution aqueuse, ou les imprégnations par des solutions desdits sels.

La teneur cumulée en ces deux métaux éventuellement déposés sur le catalyseur composite est comprise entre 0,01 et 10 % en poids, de préférence entre 0,03 et 4 % en poids.

La matrice comprend au moins un oxyde réfractaire, et en particulier au moins un oxyde d'un métal choisi dans le groupe constitué par le magnésium, l'aluminium, le titane, le zirconium, le thorium, le silicium et le bore. De plus, elle peut aussi comprendre du charbon.

La matrice préférée est l'alumine, dont la surface spécifique peut être avantageusement comprise entre 10 et 600 m²/g et de préférence entre 150 et 400 m²/g.

La demanderesse a découvert que, de façon surprenante, l'utilisation d'un catalyseur composite contenant une zéolithe MFI, possédant dans sa charpente le silicium et au moins un élément choisi dans le groupe formé par l'aluminium et le gallium, modifiée par au moins un traitement postérieur à sa synthèse décrit ci-dessus, et appelée "N/MFI", éventuellement dopée par du gallium et/ou du zinc, de préférence du gallium, sous forme oxyde et contenant éventuellement au moins un métal alcalin ou un alcalino-terreux, et une matrice sur laquelle est déposé au moins un métal noble de la famille du platine tel que le palladium, le platine, le nickel, l'iridium ou le rhodium, au moins un métal additionnel choisi dans le groupe constitué par l'étain, le germanium, le plomb, l'indium, le plomb, le gallium et le thallium, les métaux du groupe Ib tels que le cuivre, l'or, l'argent, des métaux du groupe VIII tels que le nickel, le ruthénium, le fer et les métaux du groupe VI tels que le chrome, le molybdène, le tungstène, ladite matrice contenant aussi au moins un halogène (de préférence le chlore) et ladite zéolithe contenant éventuellement au moins un métal alcalin ou un alcalino-terreux, conduit à des performances catalytiques dans les réactions d'aromatisation des paraffines contenant de 2 à 12 atomes de carbone par molécule améliorées par rapport aux catalyseurs de l'art antérieur.

Le catalyseur composite de la présente invention peut être préparé suivant deux voies dont le principe est donné ci-après, la réalisation pratique étant connue de l'homme de l'art.

### Première voie

La zéolithe MFI, ou bien la zéolithe A/MFI, ou bien la zéolithe N/MFI, est mélangée avec la matrice. Ce mélange peut être réalisé entre deux poudres, entre deux solides mis préalablement en forme, entre une poudre et un solide mis préalablement en forme. On peut également mettre en forme conjointement les deux solides par toutes les techniques décrites dans l'art antérieur: pastillage, extrusion, dragéification, coagulation en goutte, séchage par atomisation. Lors de cette opération de mise en forme, on peut si nécessaire ajouter un additif de mise en forme, choisi dans le groupe constitué par la silice et l'alumine. Ainsi on a procédé au mélange de la zéolithe avec la matrice et à la mise en forme.

Après mélange et mise en forme, on procède au dépôt des métaux, à l'introduction de l'halogène et éventuellement au dépôt du gallium et/ou du zinc, de préférence du gallium, sur l'ensemble constitué de la matrice et de la zéolithe, l'ordre de dépôt étant peu important. Si la zéolithe MFI a été initialement mélangée avec la matrice, sa modification par la technique de modification de la surface externe de ses cristaux présentée précédemment est alors nécessaire. Si la zéolithe ne contient pas initialement au moins un métal alcalin ou alcalino-terreux, cette introduction éventuelle peut se faire à tout moment lors de la préparation. Si la matrice ne contient pas initialement au moins un métal alcalin ou alcalino-terreux, cette introduction éventuelle peut se faire également à tout moment lors de la préparation.

### Deuxième voie

D'une part on dépose préalablement l'halogène, les métaux et éventuellement au moins un élément alcalin ou alcalino-terreux sur la matrice (l'ordre d'introduction des différents éléments sur la matrice étant indifférent).

D'autre part on dépose éventuellement le gallium et/ou le zinc, de préférence le gallium, et éventuellement l'élément alcalin ou alcalino-terreux sur la zéolithe N/MFI, ou éventuellement le gallium et/ou le zinc, de préférence le gallium, sur la zéolithe MFI préalablement à l'obtention de la N/MFI par la technique de modification de la surface externe des cristaux présentée précédemment.

Puis on procède au mélange de la zéolithe N/MFI contenant éventuellement du gallium et/ou du zinc, de préférence le gallium, et éventuellement l'élément alcalin ou alcalino-terreux avec la matrice contenant les métaux, I'halogène et éventuellement l'élément alcalin ou alcalino-terreux, et à leur mise en forme, la mise en forme étant obtenue dans les mêmes conditions que décrites précédemment (première voie).

Dans une variante, la zéolithe, sur laquelle ont été éventuellement déposés le gallium et/ou le zinc, de préférence le gallium, et éventuellement l'élément alcalin ou alcalino-terreux, peut être mélangée à la matrice à l'une quelconque des étapes d'introduction de l'halogène et de dépôt des métaux et sur la matrice.

La méthode préférée de préparation consiste :
- éventuellement à déposer le gallium et/ou le zinc, de préférence le gallium, et l'élément alcalin ou alcalino-terreux sur la zéolithe N/MFI,
- à déposer les métaux, à introduire l'halogène et éventuellement à introduire l'élément alcalin ou alcalino-terreux sur la matrice,
- puis ensuite à introduire la zéolithe éventuellement chargée en gallium et/ou en zinc, de préférence le gallium, et éventuellement chargée en élément alcalin ou alcalino-terreux dans la matrice chargée en métaux, en halogène et éventuellement en élément alcalin ou alcalino-terreux par mise en forme des deux poudres.

La mise en forme est de préférence effectuée après un broyage micronique, qui peut être réalisé en utilisant la technique du broyage humide.

Le catalyseur composite contient entre 1 et 99 % (en poids par rapport à la masse totale du catalyseur) de zéolithe N/MFI, le complément à 100 % étant constitué par la matrice, les métaux et l'halogène. La proportion respective de zéolithe et de matrice varie dans une large gamme, car elle dépend d'une part du rapport Si/T de la zéolithe, où T est Al et/ou Ga, et d'autre part de la teneur en métaux et en halogène de la matrice dans le cas de la méthode préférée de préparation.

La matrice contenant les métaux et l'halogène, dans le cas de la méthode préférée de préparation, est généralement préparée suivant les procédures décrites dans la demande de brevet français 91/10624, dont une partie est reproduite dans ce qui suit. Ces procédures sont utilisables par exemple sur la matrice seule, ou sur le mélange matrice/zéolithe, tel que cela a été décrit dans les deux voies de préparation.

On utilise pour l'imprégnation des métaux, soit une solution commune des métaux que l'on désire introduire, soit des solutions distinctes pour le métal noble de la famille du platine et pour le métal additionnel et éventuellement pour un élément choisi dans le groupe constitué par les métaux alcalins et les alcalino-terreux. Quand on utilise plusieurs solutions, on peut procéder à des séchages et/ou à des calcinations intermédiaires. On termine habituellement par une calcination, par exemple entre 500 et 1000°C, de préférence en présence d'oxygène moléculaire, par exemple en effectuant un balayage d'air.

Le métal noble de la famille du platine peut être incorporé dans la matrice par imprégnation de ladite matrice à l'aide d'une solution, aqueuse ou non, contenant un sel ou un composé du métal noble. Le platine est généralement introduit dans la matrice sous forme d'acide chloroplatinique, mais pour tout métal noble peuvent être également utilisés des composés ammoniaqués ou des composés tels que par exemple le chloroplatinate d'ammonium, le dichlorure de platine dicarbonyle, l'acide hexahydroxyplatinique, le chlorure de palladium, le nitrate de palladium.

Le métal additionnel M choisi dans le groupe constitué par l'étain, le germanium, le plomb, l'indium, le plomb, le gallium et le thallium, les métaux du groupe Ib tels que le cuivre, l'or, l'argent, des métaux du groupe VIII tels que le nickel, le ruthénium et le fer et les métaux du groupe VI tels que le chrome, le molybdène, le tungstène peut être introduit par l'intermédiaire de composés tels que par exemple les chlorures, les bromures et les nitrates d'étain, les halogénures, le nitrate, I'acétate et le carbonate de plomb, le chlorure et l'oxalate de germanium, le nitrate et le chlorure d'indium.

L'halogène, de préférence le chlore, peut être introduit à partir d'au moins un des halogénures des métaux de la famille du platine ou d'au moins un des halogénures des métaux additionnels, dans le cas où ces métaux sont introduits à partir d'halogénures. Une méthode complémentaire peut consister en une imprégnation de la matrice par une solution aqueuse contenant un acide ou un sel halogéné. Par exemple, le chlore peut être déposé en utilisant une solution d'acide chlorhydrique. Une autre méthode peut consister en une calcination à une température généralement comprise entre 400 et 900°C, en présence d'un composé organique contenant l'halogène, comme par exemple CCl4, CH2Cl2, CH3Cl,...).

L'élément choisi dans le groupe constitué par les alcalins et les alcalino-terreux, de préférence le lithium ou le potassium, peut être introduit par l'intermédiaire de composés tels que par exemple l'halogénure, le nitrate, le carbonate, le cyanure et l'oxalate dudit élément.

Un procédé de préparation, que nous détaillons ci-après, comprend par exemple les étapes suivantes :
a) Introduction sur la matrice d'au moins un élément choisi dans le groupe constitué par le fluor, le chlore, le brome et l'iode,
a') Introduction éventuelle sur la matrice d'au moins un élément choisi dans le groupe constitué par les alcalins et les alcalino-terreux.
b) Calcination du produit obtenu à l'étape a) ou a').
c) Introduction sur la matrice d'au moins un métal noble de la famille du platine.
d) Calcination du produit obtenu à l'étape c).
e) Introduction sur le produit obtenu à l'étape d) d'au moins un métal additionnel, désigné M ci-dessous.

Si l'on n'utilise pas de métal alcalin ou alcalino-terreux, on effectue uniquement les étapes a), c), d) et e) dudit procédé de préparation.

L'emploi dans la présente invention d'au moins un métal noble de la famille du platine peut à titre d'exemple se faire grâce à l'utilisation de composés ammoniaqués.

Dans le cas du platine, on peut citer par exemple les sels de platine IV hexamines de formule Pt(NH₃)₆X₄; les sels de platine IV halogénopentamines de formule (PtX(NH₃)₅)X₃; les sels de platine N tétrahalogénodiamines de formule PtX₄(NH₃)₂ ; les complexes de platine avec les halogènes-polycétones et les composés halogénés de formule H(Pt(aca)₂X) ; X étant un halogène choisi dans le groupe formé par le chlore, le fluor, le brome et l'iode , et de préférence X étant le chlore, et aca représentant le reste de formule C₅H₇O₂ dérivé de l'acétylacétone.

L'introduction du métal noble de la famille du platine est de préférence effectuée par imprégnation à l'aide d'une solution aqueuse ou organique de l'un des composés organométalliques cités ci-dessus. Parmi les solvants organiques utilisables, on peut citer les hydrocarbures paraffiniques, naphténiques ou aromatiques, et les composés organiques halogénés ayant par exemple de 1 à 12 atomes de carbone par molécule. On peut citer par exemple le n-heptane, le méthylcyclohexane, le toluène et le chloroforme. On peut aussi utiliser les mélanges de solvants.

Après introduction du métal noble de la famille du platine, le produit obtenu est éventuellement séché puis il est calciné de préférence à une température comprise entre 400 et 1000°C.

Après cette calcination, on procède à l'introduction d'au moins un métal additionnel M, précédée éventuellement d'une réduction à l'hydrogène à haute température, par exemple entre 300 et 500°C. Le métal additionnel M peut être introduit sous la forme d'au moins un composé organique choisi dans le groupe constitué par les complexes dudit métal, en particulier les complexes polycétoniques du métal M et les hydrocarbylmétaux tels que les alkyles, les cycloalkyles, les aryles, les alkylaryles et les arylalkyles métaux.

L'introduction du métal M est avantageusement effectuée à l'aide d'une solution du composé organométallique dudit métal dans un solvant organique. On peut également employer des composés organohalogénés du métal M. Comme composés du métal M, on peut citer en particulier le tétrabutylétain dans le cas où M est l'étain, le tétraéthylplomb dans le cas où M est le plomb et le triphénylindium dans le cas où M est l'indium.

Le solvant d'imprégnation est choisi dans le groupe constitué par les hydrocarbures paraffiniques, naphténiques ou aromatiques contenant de 6 à 12 atomes de carbone par molécule et les composés organiques halogénés contenant de 1 à 12 atomes de carbone par molécule. On peut citer par exemple le n-heptane, le méthylcyclohexane et le chloroforme. On peut aussi utiliser des mélanges des solvants définis ci-dessus.

Dans le cas où l'on n'utilise pas le procédé de préparation tel que décrit ci-dessus, on peut aussi envisager d'introduire au moins un métal additionnel M avant l'introduction d'au moins un métal noble de la famille de platine. Si le métal M est introduit avant le métal noble, le composé du métal M utilisé est généralement choisi dans le groupe constitué par l'halogénure, le nitrate, l'acétate, le tartrate, le carbonate et l'oxalate du métal M. L'introduction est alors avantageusement effectuée en solution aqueuse. Dans ce cas, avant de procéder à l'introduction d'au moins un métal noble, on procède à une calcination sous air à une température comprise entre 400 et 1000°C.

Le catalyseur composite à base d'une N/MFI et d'une matrice contient de préférence :
**1)** en poids par rapport à la matrice:
   - de 0,01 à 2 % et de préférence de 0,1 à 0,5 % d'au moins un métal noble de la famille du platine, déposé dans la matrice et/ou la zéolithe, de préférence dans la matrice,
   - déposé dans la matrice et/ou la zéolithe, de préférence dans la matrice, au moins un métal additionnel M à savoir de 0,005 à 2 %, de préférence de 0,01 à 0,5 %, d'étain dans le cas où le métal additionnel est de l'étain, de 0,005 à 0,7 %, de préférence de 0,01 à 0,6 %, d'au moins un métal choisi dans le groupe constitué par le germanium, l'indium, le plomb, le gallium et le thallium, les métaux du groupe Ib tels que le cuivre, l'or, l'argent, les métaux du groupe VIII tels que le nickel, le ruthénium, le fer et les métaux du groupe VI tels que le chrome, le molybdène, le tungstène dans le cas où M n'est pas l'étain; dans le cas où le catalyseur contient au moins deux métaux additionnels, la teneur globale en métaux additionnels choisis est comprise entre 0,02 et 1,20 %, de préférence entre 0,02 et 1,0 %, et de manière encore plus préférée entre 0,03 et 0,80 %.
   - de 0,1 à 15 %, et de préférence de 0,2 à 10 %, d'au moins un élément halogène choisi dans le groupe constitué par le fluor, le chlore, le brome et l'iode, de préférence le chlore, l'halogène étant incorporé dans la matrice et/ou la zéolithe, de préférence dans la matrice.
**2)** entre 1 et 99% en poids de zéolithe de structure MFI dont la surface externe de ses cristaux a été modifiée après sa synthèse, contenant dans sa charpente le silicium et au moins un élément choisi parmi l'aluminium et le gallium,
**3)** éventuellement en poids par rapport à la matrice :
   - de 0,01 à 4 %, de préférence de 0,1 à 0,6 % d'au moins un métal choisi dans le groupe constitué par les alcalins et les alcalino-terreux, cet élément étant introduit de préférence dans la matrice,
**4)** éventuellement en poids par rapport à la N/MFI :
   - entre 0,01 et 10% en poids, de préférence entre 0,03 et 4%, d'un élément dopeur choisi dans le groupe constitué par le gallium et le zinc, de préférence le gallium, cet élément étant introduit dans la zéolithe et/ou la matrice, de préférence dans la zéolithe.
   - entre 0,001 et 6 % en poids, de préférence entre 0,005 et 3 % en poids d'au moins un élément alcalin ou alcalino-terreux additionnel, cet élément étant introduit de préférence dans la zéolithe.

Dans le procédé selon l'invention, à l'issue de la préparation, le catalyseur mis en forme contient une zéolithe MFI dont la surface externe de ses cristallites a été modifiée après sa synthèse par la technique décrite précédemment, des métaux, au moins un halogène et une matrice, et on procède à une calcination sous air à une température comprise entre 350°C et 1000°C, de préférence entre 400°C et 700°C, et de préférence encore entre 450°C et 600°C. Le catalyseur ainsi calciné peut avantageusement subir un traitement d'activation sous hydrogène à haute température par exemple comprise entre 300 et 500°C. La procédure de traitement sous hydrogène consiste par exemple en une montée lente de la température sous courant d'hydrogène jusqu'à la température maximale de réduction, comprise généralement entre 300 et 500°C et de préférence entre 350 et 450°C, suivie d'un maintien à cette température pour une durée comprise en général entre 1 et 6 heures.

Le catalyseur de la présente invention décrit précédemment est mis en oeuvre pour l'aromatisation des alcanes contenant de 2 à 12 atomes de carbone par molécule, en présence ou non d'oléfines. Cette réaction de production d'hydrocarbures aromatiques revêt un intérêt particulier car elle peut permettre, par exemple, d'une part de valoriser des fractions légères provenant d'opérations de raffinage en les transformant en des produits à plus haute valeur ajoutée (benzène, toluène et xylènes), d'autre part de transformer des charges paraffiniques pouvant contenir des oléfines en bases pour carburant à haut indice d'octane, tout en contribuant dans les deux cas à la production de quantités importantes d'hydrogène indispensable pour les procédés d'hydrotraitement par exemple.

La charge hydrocarbonée qui contient des composés contenant de 2 à 4 et/ou de 5 à 12 atomes de carbone par molécule est mise en contact avec le catalyseur de la présente invention à une température comprise entre 400 et 700 °C.

Les exemples qui suivent précisent l'invention sans toutefois en limiter la portée.

### Exemple 1 : préparation de l'alumine renfermant 0,38 % de platine, 0,30 % d'étain et 1,0 % de chlore (catalyseur A).

L'alumine utilisée a une surface spécifique de 210 m²/g et un volume poreux de 0,51 cm³/g.

A 100 g de support d'alumine on ajoute 500 cm³ d'une solution aqueuse d'acide chlorhydrique. On laisse en contact 3 heures, on essore, on sèche 1 heure à 100-120°C.

Sur le produit séché contenant le chlore, on procède alors à l'imprégnation du platine, en ajoutant au solide 150 cm³ d'une solution aqueuse d'acide hexachloroplatinique. La concentration en platine de cette solution est égale à 2.7 g/l. On laisse 6 heures en contact, on sèche 1 heure à 100-120°C puis on calcine 2 heures à 530°C.

Sur le produit calciné contenant le chlore et le platine, on procède à l'imprégnation de l'étain : une solution organique de tétrabutylétain est mise en contact avec le support d'alumine à raison de 100 cm³ de solution pour 100 g de support pendant 6 heures. Le solide obtenu est alors essoré et séché 1 heure à 100-120°C puis réduit sous courant d'hydrogène sec pendant 2h à 450°C.

L'alumine contient alors, en poids, 0,38% de platine, 0,3% d'étain et 1,0% de chlore.

### Exemple 2 : zéolithe MFI forme hydrogène (catalyseur B).

On utilise une zéolithe H-MFI forme hydrogène qui est obtenue de la forme issue de la synthèse de la façon suivante :
- traitement au nitrate d'ammonium
- calcination à 550°C sous air.

Les caractéristiques du solide obtenu sont : un rapport Si/Al égal à 27 et une teneur en sodium égale à 0,009 % en poids. Son volume poreux mesuré par adsorption d'azote à 77K est de 0,189 cm³/g. Le volume de maille du réseau cristallin est de 5341 (10¹⁰m)³.

### Exemple 3 : préparation d'une zéolithe MFI forme hydrogène modifiée par l'hexafluorosilicate d'ammonium (catalyseur C)

Un échantillon de cette zéolithe est préparé à partir de 100g de zéolithe H-MFI séchée et sous forme hydrogène. La masse de zéolithe est mesurée après sèchage sous air sec à 450°C durant 4 heures. Cette dernière est ensuite mise sous forme ammonium (notée NH4-MFI) au travers de traitements par des solutions aqueuses de nitrate d'ammonium à reflux. Après filtration, le solide est séché à l'étuve à 120°C.

La zéolithe NH4-MFI ainsi obtenue est ensuite mise en suspension dans une solution aqueuse d'acétate d'ammonium à 80°C. Une solution aqueuse contenant 1,07 gramme d'hexafluorosilicate d'ammonium est alors ajoutée pour une masse initiale de 100 grammes de zéolithe sèche. Après un temps de contact de 2 heures sous agitation, le solide est abondamment rincé à l'eau.

Cette opération est recommencée successivement 5 fois et finalement le solide est séché et calciné à 550 °C sous air.

Les caractéristiques du solide obtenu (catalyseur C) sont :
- un rapport molaire Si/Al global égal à 32,
- un rapport molaire Si/Al de surface égal à 74.

Ce rapport de surface est mesuré par XPS (ESCA) et est caractéristique de la surface externe des cristaux de zéolithe, où ont donc principalement lieu les étapes de désalumination et de réinsertion des atomes de silicium.

### Exemple 4 : préparation des mélanges (catalyseurs D et E)

Les catalyseurs D et E sont préparés par mélange à partir des catalyseurs A, B et C. Ces mélanges sont réalisés dans les proportions massiques suivantes :
- catalyseur D = 60 g catalyseur A + 40 g catalyseur B
- catalyseur E = 60 g catalyseur A + 40 g catalyseur C

Chacun des constituants de ces mélanges est soumis au préalable à un broyage submicronique. Après mélange, les catalyseurs D et E sont mis en forme par pastillage.

### Exemple 5 : performances des catalyseurs sur propane

Les quatre catalyseurs A, B, C, et D, ainsi que le catalyseur E selon l'invention, et dont la préparation a été décrite précédemment, ont été testés en transformation du propane dans les conditions suivantes :
- - température: : 485°C
- - pression: : 1 bar
- - pph: : 1,5 h-1

Les résultats du test sont reportés dans le tableau 1.

**Tableau 1**

| | | Sélectivités (% moles) | | | | |
|---|---|---|---|---|---|---|
| Catalyseur | Conversion (% moles) | méthane | éthane + éthylène | propylène | butanes + butènes | Aromatiques |
| Catalyseur A (comparatif) | 17 | 2 | 3 | 91 | 1 | 3 |
| Catalyseur B (comparatif) | 25 | 47 | 27 | 19 | 3 | 4 |
| Catalyseur C (comparatif) | 23 | 46 | 26 | 19 | 4 | 5 |
| Catalyseur D (comparatif) | 38 | 9 | 25 | 20 | 5 | 41 |
| Catalyseur E | 35 | 8 | 24 | 20 | 4 | 44 |

On constate donc que le catalyseur E selon l'invention conduit à des sélectivités en produits aromatiques nettement supérieures à celles des catalyseurs comparatifs, notamment du catalyseur D.

### Exemple 6: performances des catalyseurs sur naphtas légers

On se propose de transformer une charge constituée d'un mélange d'hydrocarbures contenant de 5 à 6 atomes de carbone par molécule. On opère pour cela en présence d'un des catalyseurs A, B, C, D et E dont la préparation a été décrite précédemment.

Ces catalyseurs ont été testés en transformation d'une charge C5-C6 dont la composition est la suivante (exprimée en % poids) :

| | C5 | C6 |
|---|---|---|
| Paraffines | 90% | 5,4% |
| Naphtènes | 3,7% | 0,90% |

Les conditions opératoires sont les suivantes :
- - température: : 475°C
- - pression: : 2,5 bars
- - pph: : 2 h⁻¹

Les résultats du test sont reportés dans le tableau 2.

**Tableau 2**

| | | Sélectivités (% poids) | | | | | |
|---|---|---|---|---|---|---|---|
| Catalyseur | Conversion (% poids) | CH₄ | C₂H₆ + C₂H₄ | C₃H₈ + C3H6 | butanes + butènes | oléfines C₅+C₆ | Aromatiques |
| Catalyseur A (comparatif) | 56 | 4 | 10 | 21 | 15 | 40 | 10 |
| Catalyseur B (comparatif) | 92 | 29 | 26 | 14 | 18 | 11 | 12 |
| Catalyseur C (comparatif) | 82 | 24 | 25 | 16 | 21 | 0 | 14 |
| Catalyseur D (comparatif) | 87 | 9 | 15 | 17 | 11 | 1 | 47 |
| Catalyseur E | 84 | 9 | 15 | 16 | 9 | 1 | 50 |

On constate donc que le catalyseur E selon l'invention conduit à des sélectivités en produits aromatiques nettement supérieures à celles des catalyseurs comparatifs, notamment du catalyseur D.

## Revendications

1. Catalyseur composite renfermant d'une part une zéolithe de structure MFI qui a été modifiée après sa synthèse par au moins un traitement par au moins une solution diluée de fluorosilicate d'un cation, ladite zéolithe contenant dans sa charpente le silicium et au moins un élément choisi dans le groupe constitué par l'aluminium et la gallium et d'autre part une matrice, ledit catalyseur renfermant en outre :
- au moins un métal noble de la famille du platine,
- au moins un métal dit additionnel, ledit métal étant choisi dans le groupe constitué par l'étain, le germanium, l'indium, le plomb, le gallium, le thallium, le cuivre, l'or, l'argent, le nickel, le ruthénium, le fer, le chrome, le molybdène et le tungstène,
- au moins un élément halogène choisi dans le groupe constitué par le fluor, le chlore, le brome et l'iode.

2. Catalyseur composite selon la revendication 1 et renfermant en outre un élément dopeur choisi dans le groupe constitué par le gallium et le zinc.

3. Catalyseur composite selon la revendication 2 dans lequel l'élément dopeur est le gallium.

4. Catalyseur composite selon l'une des revendications 2 ou 3 dans lequel la la teneur en élément dopeur, exprimée en poids par rapport à la zéolithe, est comprise entre 0,01 et 10 %.

5. Catalyseur composite selon l'une des revendications 1 à 4 dans lequel :
la teneur en métal noble de la famille du platine est comprise entre 0,01 et 2 %, exprimée en poids par rapport à la matrice;
la teneur en métal additionnel exprimée en poids par rapport à la matrice est comprise entre :
- 0,005 et 2 % lorsque le métal additionnel est l'étain
- 0,005 à 0,7 % lorsque le métal additionnel est choisi parmi les autres métaux additionnels, avec une teneur globale en métaux additionnels, en poids par rapport à la matrice, comprise entre 0,02 et 1,20% lorsqu'il y a présence au moins de deux métaux additionnels;
la teneur en halogène (exprimée en poids par rapport à la matrice) est comprise entre 0,1 et 15 %.

6. Catalyseur composite selon l'une des revendications 1 à 5 dans lequel la matrice renferme en outre 0,01 à 4 % en poids d'au moins un métal choisi dans le groupe constitué par les métaux alcalins et les métaux alcalino-terreux.

7. Catalyseur composite selon la revendication 6 dans lequel ledit métal choisi est le lithium ou le potassium.

8. Catalyseur composite selon l'une des revendications 1 à 7 dans lequel la matrice est une alumine.

9. Utilisation du catalyseur composite selon l'une des revendications 1 à 8 dans un procédé de production d'hydrocarbures aromatiques à partir d'une charge hydrocarbonée comprenant des composés comportant de 2 à 12 atomes de carbone par molécule.

## Claims

1. Composite catalyst comprising a MFI structure zeolite which has been modified after synthesis by at least one treatment with at least one dilute fluorosilicate cation solution, said zeolite having a framework comprising silicon and at least one element selected from the group constituted by aluminium and gallium, the catalyst also comprising a matrix, said catalyst further comprising:
- at least one noble metal of the platinum family,
- at least one additional metal, said metal being selected from the group constituted by tin, germanium, indium, lead, gallium, thallium, copper, gold, silver, nickel, ruthenium, iron, chromium, molybdenumm and tungsten,
- at least one halogen element selected from the group constituted by fluorine, chlorine, bromine and iodine.

2. Composite catalyst according to claim 1, further comprising a doping element selected from the group constituted by gallium and zinc.

3. Composite catalyst according to claim 2 wherein the doping element is gallium.

4. Composite catalyst according to claim 2 or 3 wherein the doping element content, expressed by weight with respect to the zeolite, is between 0.01 and 10 %.

5. Composite catalyst according to any one of claims 1 to 4 wherein:
- the quantity of noble metal of the platinum family is between 0.01 and 2 %, expressed by weight with respect to the matrix;
- the quantity of additional metal expressed by weight with respect to the matrix is between:
- 0.005 and 2 % when the additional metal is tin,
- 0.005 and 0.7 % when the additional metal is selected from the other additional metals, with a total additional metal content, by weight with respect to the matrix, of between 0.02 and 1.20 % when at least two additional metals are present;
- the halogen content (expressed by weight with respect to the matrix) is between 0.1 and 15 %.

6. Composite catalyst according to any one of claims 1 to 5 wherein the matrix further comprises 0.01 to 4 % by weight of at least one metal selected from the group constituted by alkali metals and alkaline-earth metals.

7. Composite catalyst according to claim 6 wherein said metal is lithium or potassium.

8. Composite catalyst according to any one of claims 1 to 7 wherein the matrix is an alumina.

9. Use of a composite catalyst according to any one of claims 1 to 8 in a process for the production of aromatic hydrocarbons from a hydrocarbon feedstock comprising compounds containing 2 to 12 carbon atoms per molecule.

## Patentansprüche

1. Verbundkatalysator, der einerseits einen Zeolith von MFI Struktur, der nach seiner Synthese durch wenigstens eine Behandlung durch wenigstens eine verdünnte Fluorsilikatlösung eines Kations modifiziert ist, wobei dieser Zeolith in seinem Gitter das Silicium und wenigstens ein Element enthält, das aus der durch Aluminium und Gallium gebildeten Gruppe gebildet ist und andererseits eine Matrix umfaßt, wobei der Katalysator im übrigen umfaßt:
- wenigstens ein Edelmetall der Platinfamilie,
- wenigstens ein sogenanntes Zusatzmetall, wobei das Metall gewählt ist aus der Gruppe, die gebildet wird durch Zinn, Germanium, Indium, Blei, Gallium, Thallium, Kupfer, Gold, Silber, Nickel, Ruthenium, Eisen, Chrom, Molybdän und Wolfram, sowie
- wenigstens ein Halogenelement, das aus der durch Fluor, Chlor, Brom und Jod gebildeten Gruppe gewählt ist.

2. Verbundkatalysator nach Anspruch 1, der im übrigen ein Dotierungselement umfaßt, das aus der durch Gallium und Zink gebildeten Gruppe gewählt ist.

3. Verbundkatalysator nach Anspruch 2, bei dem das Dotierungselement Gallium ist.

4. Verbundkatalysator nach einem der Ansprüche 2 oder 3, bei dem der Gehalt an Dotierungselement ausgedrückt in Gewicht bezogen auf den Zeolith zwischen 0,01 und 10% liegt.

5. Verbundkatalysator nach einem der Ansprüche 1 bis 4, bei dem der Gehalt an Edelmetall der Platinfamilie zwischen 0,01 und 2%, ausgedrückt in Gewicht bezogen auf die Matrix beträgt;
der Gehalt an Zusatzmetall, ausgedrückt in Gewicht bezogen auf die Matrix zwischen:
- 0,005 und 2% beträgt, wenn das Zusatzmetall Zinn ist
- 0,005 bis 0,7% beträgt, wenn das Zusatzmetall gewählt ist aus den anderen Zusatzmetallen, mit einem Gesamtgehalt an Zusatzmetallen, in Gewicht bezogen auf die Matrix, der zwischen 0,02 und 1,2% beträgt, wenn wenigstens zwei Zusatzmetalle vorhanden sind;
Der Gehalt an Halogen (ausgedrückt in Gewicht bezogen auf die Matrix) zwischen 0,1 und 15% beträgt.

6. Verbundkatalysator nach einem der Ansprüche 1 bis 5, bei dem die Matrix im übrigen 0,01 bis 4 Gew.% wenigstens eines Metalls umfaßt, das aus der durch die Alkalimetalle und die Erdalkalimetalle gebildeten Gruppe gewählt ist.

7. Verbundkatalysator nach Anspruch 6, bei dem dieses gewählte Metall Lithium oder Kalium ist.

8. Verbundkatalysator nach einem der Ansprüche 1 bis 7, bei dem die Matrix ein Aluminiumoxyd ist.

9. Verwendung des Verbundkatalysators nach einem der Ansprüche 1 bis 8 in einem Verfahren der Herstellung aromatischer Kohlenwasserstoffe aus einer kohlenwasserstoffhaltigen Charge, die 2 bis 12 Kohlenstoffatome pro Molekül aufweisende Verbindungen umfaßt.
